# EUROPÄISCHE PATENTANMELDUNG

(11) **EP 3 796 749 A1**
(43) Veröffentlichungstag der Anmeldung: **24.03.2021**
(21) Anmeldenummer: 19000419.2
(22) Anmeldetag: 19.09.2019
(51) Int. Cl.: H05B 1/02, H05B 3/14, H05B 3/34, H05B 3/26, F24D 13/02

(54) **HEIZELEMENT**

(71) Anmelder: BodyPhoton GmbH, 61231 Bad Nauheim (DE)
(72) Erfinder: Volz, Hans-Jürgen, 61231 Bad Nauheim (DE)
(74) Vertreter: Borbach, Markus

(57) **Zusammenfassung**

Die vorliegende Erfindung betrifft ein Heizelement, welches dazu eingesetzt werden kann, einen Raum aufzuheizen. Bei dem Raum handelt es sich vorzugsweise um eine Sauna oder eine Trainingskabine. Insbesondere geht es um ein Heizelement (40), welches zumindest eine Frontplatte (42) aufweist, wobei in der Frontplatte (42) mindestens ein erster Schlitz (50) und ein zweiter Schlitz (52) vorgesehen sind, so dass eine Luftströmung vom ersten Schlitz (50) zum zweiten Schlitz (52) stattfinden kann, wobei das Heizelement (40) ferner ein Infrarot-Element aufweist, welches die Front platte (42) erwärmen kann, und welches ferner auf die Luftströmung einwirkt, welche vom ersten Schlitz (50) zum zweiten Schlitz (52) führt. Die Erfindung betrifft auch ein Verfahren zum Beheizen einer Wärmekammer (10).

## Beschreibung

### Gebiet der Erfindung

Die vorliegende Erfindung bezieht sich auf ein Heizelement, welches dazu eingesetzt werden kann, einen Raum aufzuheizen. Bei dem Raum handelt es sich vorzugsweise um eine Sauna oder eine Trainingskabine.

### Hintergrund der Erfindung

Es gibt eine Vielzahl von Heizelementen oder Heizkörpern und auch Heizstrahlern für die allgemeine Aufheizung eines Raumes. Besonders angepasste Heizstrahler kommen häufig in Badezimmern zum Einsatz wie auch in Saunen.

Die deutsche Auslegeschrift 1 089 092 offenbart einen flächenförmigen Strahlungsofen zur Befestigung in einer Wand, insbesondere im Badezimmer. Dieser Strahlungsofen bezieht seine Wärme von einem Heizleiter. Der Heizleiter ist nach hinten durch einen Reflektor abgeschirmt. Nach vorne erwärmt der Heizleiter eine Strahlfläche, die dem Raum zugewandt ist. Die Strahlfläche wird zusätzlich durch Schutzstäbe geschützt, um Verbrennungen vorzubeugen.

Dieser Strahlungsofen ist so gestaltet, dass eine möglichst gleichmäßige Wärmeverteilung erreicht wird und Konvektionswärme vermieden wird.

Die US-Patentanmeldung US 2008/0292293 offenbart ein Heizelement, welches mit Leinen-Carbonfasern arbeitet. Dabei wird eine große flache Heizfläche erzeugt. Diese kann eine Wand ganz oder durchaus auch zum überwiegenden Teil bedecken. Da das Material des Heizelementes nicht nur flächig sondern auch biegsam ist, kommt es in Betracht, das Heizelement nach Art eines Rollos in einem Kasten aufzuwickeln.

Die vorliegende Erfindung möchte in einfacher und ökonomischer Weise ein Heizelement schaffen, welches besonders für kleine Räume geeignet ist. Dabei soll Infrarot-Wärme erzeugt werden. Das Element soll so gestaltet werden, dass es sich optisch vorteilhaft auf einer Wand montieren lässt, durch die Verwendung mehrerer Elemente soll im Einzelfall auch eine geschlossene Wandfläche erzeugt werden können.

Diese Aufgabe wird durch einen Schnelltrennschalter nach Anspruch 1 gelöst. Vorteilhafter Weiterbildungen sind in den Unteransprüchen angegeben. Die entsprechenden Vorteile weist auch ein Verfahren zur Stromkreistrennung nach Verfahrensanspruch 14 und seinem Unteranspruch auf.

### Beschreibung

Das Heizelement nach der vorliegenden Erfindung kann insbesondere zum Aufheizen einer Wärmekammer eingesetzt werden. Unter einer Wärmekammer kann dabei beispielsweise eine Wärmekammer zu Labor- und Testzwecken verstanden werden, aber auch eine Sauna oder ein Trainingsraum. Es hat sich gezeigt, dass das körperliche Training oder auch Rehabilitationstraining bei erhöhten Temperaturen (etwa um die Körpertemperatur) effektiver ist als das Training bei einer typischen Raumtemperatur von ca. 20°C. Ferner hat Strahlung auch unabhängig von der Raumaufheizung einen positiven Effekt auf den menschlichen Körper, besonders bei körperlicher Aktivität zu Trainings- oder Rehabilitationszwecken. Das Heizelement kann dabei zweckmäßigerweise an einer Wand einer solchen Wärmekabine montiert werden, und zwar entweder auf die Wand aufgesetzt oder selbst einen Teil einer Wand bilden, etwa nach Art eines Wandpaneels.

Das erfindungsgemäße Heizelement weist eine Front platte auf. Diese Frontplatte ist typischerweise eine ebene Platte. Sie kann aus Metall gefertigt sein, wird aber vorzugsweise aus einem Material gefertigt, das bei Hautkontakt keine Verbrennungen auslöst, etwa aus Holz, oder besonders bevorzugt aus Kunststoffen.

Erfindungsgemäß sollen in der Frontplatte mindestens ein erster Schlitz und ein zweiter Schlitz vorgesehen sein. Dabei soll eine Luftströmung vom ersten Schlitz zum zweiten Schlitz stattfinden können. Das Heizelement soll ein Infrarot-Element aufweisen, welches die Front platte erwärmen kann, und welches ferner auf die Luftströmung einwirkt, welche vom ersten Schlitz zum zweiten Schlitz führt.

Mit einem Heizelement dieser Art kann durch Abstrahlung Strahlungswärme erzeugt werden. Dabei kann die Abstrahlung direkt vom Infrarot-Element erfolgen, soweit dieses für Strahlung nicht abgeschirmt ist. Beispielsweise kann die Abstrahlung auch durch Schlitze oder Löcher in der Frontplatte erfolgen. Zusätzlich oder auch überwiegend kann die Abstrahlung über die Frontplatte erfolgen, welche ihrerseits durch das Infrarot-Element aufgeheizt wird.

Das Infrarot-Element soll auch auf die Luftströmung einwirken können, d. h. Luft erhitzen können. Luft, welche vom ersten Schlitz zum zweiten Schlitz fließt, wird dadurch also erhitzt. Diese Luft kann aus dem zweiten Schlitz austreten. In dieser Weise wird ein warmer Luftstrom erzeugt, und das Heizelement kann zusätzlich zur Strahlungswärme auch eine Erwärmung durch Konvektion bewirken.

Es ist zweckmäßig, wenn der erste Schlitz im unteren Viertel der Frontplatte angeordnet ist, und der zweite Schlitz im oberen Viertel der Frontplatte angeordnet ist. In dieser Weise sind die Schlitze über eine wesentliche Länge der Front platte beabstandet. Diese Länge kann als Länge eines Strömungsweges wirken, so dass das Infrarot-Element die Luftströmung über eine längere Strecke aufheizen kann.

Es ist zweckmäßig, wenn das Infrarot-Heizelement an der Innenseite der Frontplatte vorgesehen wird. Besonders zweckmäßig ist dabei ein flächiges Infrarot-Heizelement. Dieses flächige Heizelement kann sich hauptsächlich entlang der Front platte erstrecken. Es ist beispielsweise möglich, ein solches flächiges Infrarot-Heizelement auf die Innenseite der Front platte aufzukleben, oder es auch in mechanischer Weise dort zu befestigen. Eine Bespannung der Frontplatte ist zweckmäßig, also die Fixierung des Infrarot-Heizelementes an ausgewählten Randpunkten. Das Infrarot-Heizelement kann die Frontplatte ganzflächig oder über Teilflächen berühren oder auch ohne direkte Berührung mit der Frontplatte montiert werden.

Eine Verbindung kann auch zu einem besonders effektiven Aufheizen der Frontplatte führen. Die Frontplatte kann damit in effektiver Weise zur Abgabe von Strahlungswärme genutzt werden.

In diesem Zusammenhang hat es sich als besonders zweckmäßig erwiesen, ein Infrarot-Element zu verwenden, das als Matte zur Verfügung gestellt wird. Eine solche Matte kann vorzugsweise auch Karbonfasern enthalten. In dieser Weise lässt sich ein gut aufheizbares Infrarot-Element erzeugen, welches leicht an der Innenseite einer Frontplatte befestigt werden kann. Die Matte kann ferner Glasfasern aufweisen. Glasfasern sorgen u.a. für eine gute mechanische Belastbarkeit der Matte. Bevorzugt sind Glasfaser-Karbon-Matten.

Eine zweckmäßige Heizmatte soll Heizfasern aufweisen. Diese Heizfasern können zur Wärmeabgabe angeregt werden. In der Regel geschieht dies durch die Durchführung von Strom, es handelt sich also um eine resistive Heizung. In der Regel dienen die Karbonfasern in der Heizmatte als Heizfasern.

Es ist zweckmäßig, wenn im Heizelement eine verschieden große Anzahl von Heizfasern zur Wärmeerzeugung herangezogen werden kann. Es kann also mindestens einen ersten Betriebsmodus geben, in dem eine erste Anzahl von Heizfasern in der Wärmeerzeugung beteiligt ist. Ferner kann es einen zweiten Betriebsmodus geben, in dem eine zweite Anzahl von Heizfasern an der Wärmeerzeugung beteiligt ist, welche größer ist als die erste Anzahl. In der Regel geht es dabei darum, einen Stromfluss durch eine kleinere oder größere Anzahl von Heizfasern zu erzeugen. Dabei kann es durchaus eine feine Abstimmung geben, theoretisch können einzelne Heizfasern angeregt werden, zumindest aber können einzelne Gruppen von Heizfasern angeregt werden.

Es kann also auch ein Heizelement zweckmäßig sein, bei dem etwa eine erste Anzahl, eine zweite Anzahl und eine dritte Anzahl von Heizfäden angeregt wird, wobei die dritte Anzahl größer ist als die zweite Anzahl, welche ihrerseits wiederum größer ist als die erste Anzahl. In dieser Weise könnten also etwa drei Gruppen von Heizfäden gebildet werden. Es kann auch zweckmäßig sein, mehr Gruppen von Heizfäden zu bilden, etwa vier Gruppen, fünf Gruppen, sechs Gruppen, sieben Gruppen, acht Gruppen, neun Gruppen oder zehn Gruppen.

Diese Gestaltung des Heizelementes ermöglicht es, das Heizelement stets mit konstanten Strom- und Spannungswerten zu beschalten. In der Regel ergibt sich aus der üblichen Stromerzeugung, dass der Betrieb des Heizelementes mit konstanter Spannung am einfachsten ist. Es hat auch viele Vorteile, das Heizelement mit konstantem Stromfluss zu betreiben. Insbesondere wird dann Strahlungswärme immer im gleichen Wellenbereich abgegeben. Dieser Wellenbereich kann für den Zweck des Heizelementes optimal ausgesucht werden.

Wenn das Heizelement aber mit konstantem Strom und konstanter Spannung betrieben wird, so ist es zweckmäßig, die Leistung des Heizelementes durch die Anzahl der zur Wärmeerzeugung herangezogenen Heizfasern zu variieren. Zu diesem Zweck kann ein Steuergerät dienen. Im Fall der resistiven Heizung wird das Steuergerät den Stromfluss durch eine entsprechend große Anzahl von Heizfäden erlauben.

Es ist zweckmäßig, wenn das Heizelement außer der Frontplatte noch eine im Wesentlichen parallellaufende Rückenplatte aufweist. Es ist ferner zweckmäßig, wenn zusätzlich eine linke und/oder eine rechte Seitenwand, und ferner eine untere und/oder eine obere Wand vorgesehen sind. In dieser Weise lässt sich ein Heizelement mit einem quaderförmigen Innenraum erzeugen, welcher durch einzelne oder alle genannten Wände begrenzt ist. Die entsprechenden Wände bieten Schutz gegen ungewollten Zugriff auf das Heizelement. Sie können ferner zu Montagezwecken dienen, um das Heizelement gut in der erwähnten Wärmekammer montieren zu können. Die Seitenwände begrenzen im Übrigen die Luftströmung. Es ist zweckmäßig, wenn Luft durch den ersten Schlitz in den Innenraum des Heizelementes einströmt und durch den zweiten Schlitz abgegeben wird. Der Innenraum des Heizelementes kann sich insgesamt durch das Infrarot-Element (oder im Einzelfall zusätzlich oder alternativ durch ein anderes Element) aufheizen. Luft, welche durch dieses Innere strömt, kann dabei schnell aufgeheizt werden und stark erwärmt durch den zweiten Schlitz austreten.

Zu beachten ist, dass ein Heizelement nach der vorliegenden Erfindung mit geschlossenen Schlitzen und insgesamt mit geschlossenem Innenraum betrieben werden kann. Dadurch kann die Abgabe von Konvektionswärme bewusst minimiert werden. Das Heizelement ist nach Größe, Aufbau und Beheizung entsprechend auszulegen.

Konventionelle Heizelemente, welche beispielsweise mit Heizröhren arbeiten und häufig als Heizstrahler vermarktet werden, haben ein ganz oder teilweise offenes Gehäuse. Dies ist erforderlich, damit im Gehäuse keine Überhitzung auftritt. Damit werden Strahlungswärme und durch ein- und ausströmende Luft auch unvermeidlich Konvektionswärme stets gemeinsam abgegeben. Es hat sich aber gerade bezogen auf therapeutische oder medizinische Anwendungen gezeigt, dass es zweckmäßig ist, diese unter Strahlungseinfluss auszuüben. Somit ist es vorteilhaft, wenn die Strahlungsabgabe und die Temperaturregelung unabhängiger erfolgen können. Beispielsweise ist es möglich, bei relativ geringer Temperaturabgabe, nämlich bei geschlossenen Schlitzen und unterdrückter Abgabe von Konvektionswärme, Strahlungswärme abzugeben.

Es ist zweckmäßig, wenn die Front platte eines Heizelementes größer ist als die Rückenplatte. Es ist dabei auch zweckmäßig, wenn die Frontplatte gegenüber der Rückenplatte, oder auch gegenüber Seitenwänden, oder der oberen und/oder unteren Wand seitliche Überstandsflächen aufweist, also insbesondere eine obere Überstandsfläche, eine untere Überstandsfläche und zwei seitliche Überstandsflächen. Diese Überstandsflächen verdecken die dahinter liegende Konstruktion und sind so ästhetisch vorteilhaft. Ferner ist es aufgrund dieser Überstandsflächen leicht möglich, das Heizelement nach Art eines Paneels in eine Wand, insbesondere auch in eine Wandausnehmung einzulassen. Hinter den Überstandsflächen können dabei auch Befestigungselemente vorgesehen werden.

Die Überstandsflächen ermöglichen es auch, innen eine weitgehend fugenlose Wandfläche anzubieten. Dies hat nicht nur ästhetische Vorteile. Auf eine fugenlose Wandfläche können Informationen projiziert werden. Eine erfindungsgemäße Wärmekabine kann optional mit einem Bildschirm ausgerüstet werden. Die Ausrüstung mit einem Bildschirm ist aber nicht erforderlich, wenn beispielsweise durch einen Projektor Informationen direkt auf die Oberfläche der Innenwände geworfen werden. Auch bei diesen Informationen kann es um Unterhaltungszwecke gehen, beispielsweise ein Video- oder Fernsehprogramm, oder es können auch Informationen zur Nutzung der Kabine sein, beispielsweise kann die Kabinentemperatur angezeigt werden oder die Nutzungsdauer. Ferner kann es interessant sein, Anleitungen zu Sport- oder Rehabilitationsübungen auf die Wand zu projizieren.

Es ist zweckmäßig, wenn im unteren Viertel der Frontplatte zusätzlich zum ersten Schlitz auch ein dritter Schlitz vorgesehen ist. Es ist in entsprechender Weise zweckmäßig, wenn im oberen Viertel der Frontplatte ein zweiter Schlitz und ein vierter Schlitz vorgesehen sind. Einen dritten und einen vierten Schlitz vorzusehen erlaubt es, die Öffnungen in der Front platte größer zu machen. Ein sehr großer erster oder zweiter Schlitz aber würde die Frontplatte mechanisch instabil machen und auch einen eventuell gefährlichen Zugriff ins Innere des Heizelementes ermöglichen. Bei einem solchen Zugriff könnte es zur Berührung des Heizelementes kommen. Es ist also gut, die Form und Lage der Schlitze zu optimieren. Mit vier Schlitzen gelingt dies häufig am besten.

Es ist ebenfalls vorteilhaft, wenn für mindestens einen der Schlitze eine Schließvorrichtung vorgesehen ist. Zweckmäßigerweise kann auch für den ersten und den zweiten Schlitz, oder für alle Schlitze, eine solche Schließvorrichtung vorgesehen sein. Mit der entsprechenden Schließvorrichtung lassen sich die Luftströmung und damit die Konvektionsleistung des Heizelementes regeln. Schon das Verschließen eines Zuführschlitzes (in der Regel des ersten Schlitzes), oder eines Ausführschlitzes (in der Regel zumindest des zweiten Schlitzes) kann die Wärmeströmung unterdrücken. Eine effektive Unterdrückung der Wärmeströmung geschieht durch das Schließen aller Schlitze. Das Schließen aller Schlitze kann zusätzlich einen noch sichereren Betrieb des Heizelementes gewähren, da es dann verhindert wird, dass versehentlich die innerhalb des Heizelementes vorgesehene Heizvorrichtung, etwa das Infrarot-Heizelement berührt wird.

Die Schließvorrichtung kann in verschiedener mechanischer Form vorgesehen sein. Besonders zweckmäßig ist eine Blende, also ein im Wesentlichen flächiges Bauteil, welches vor die Schlitzöffnung bewegt werden kann. Zweckmäßig sind Blenden, die um eine ihrer Achsen drehbar sind oder auch verschieblich gelagert sind. Eine verschiebliche Blende wird hierin als besonders zweckmäßig erachtet. Zweckmäßigerweise ist die Blende in Schlitzführungen oder Nuten verschieblich. Für viele Auslegungen des Heizelementes hat sich eine verschiebliche Blende als am wenigsten störend für den Luftstrom innerhalb der Kammer erwiesen.

Zweckmäßig ist es auch, wenn diese Blende durch einen Elektromotor bewegt werden kann. Es ist denkbar, eine Blende von manuell zu bewegen. Dazu können vorteilhafterweise auch Griffeinrichtungen vorgesehen sein. Einfacher ist aber die Bewegung der Blende durch einen Antriebsmotor, z.B. Elektromotor. Dies kann insbesondere auch Verbrennungen oder ein zumindest unangenehmes Wärmegefühl vermeiden. Im Zusammenhang mit dem Elektromotor kann dabei auch eine Antriebsstange (z.B. eine Gewindestange) zum Ensatz kommen, welche die Blende entlang ihrer verschieblichen Lagerung präzise bewegt.

Die vorliegende Erfindung betrifft auch ein Verfahren zum Beheizen einer Wärmekammer.

Vorzugsweise werden die Schritte im Zusammenhang und in der Reihenfolge ihrer Aufzählung ausgeführt. Das Verfahren ist auf das erfindungsgemäße Heizelement bezogen zu verstehen. Das heißt, Merkmale der Gestaltung des Heizelementes sind analog auf das Verfahren zu übertragen, und Merkmale des Verfahrens sind analog auf Merkmale des Heizelementes zu übertragen.

Bei diesem Verfahren soll mindestens ein Infrarot-Heizelement zum Einsatz kommen. Ferner soll eine Temperaturmessung vorgesehen sein, die zum Messen einer Ist-Temperatur dient. Ferner soll eine Regelungseinrichtung vorgesehen sein, welche bei einer Überschreitung oder Unt erschreit ung eines Temperatursollwertes ein korrespondierendes Signal erzeugen kann. Ein solches Signal kann etwa ein elektrisches Signal sein oder auch ein elektronisches Signal im Rahmen einer Computersteuerung. Über diese Regelungseinrichtung soll eine Temperaturregelung erfolgen.

Bei diesem Verfahren soll mindestens ein erstes Infrarot-Heizelement zum Einsatz kommen. Es ist eine Regelungseinrichtung vorgesehen, die mindestens eine Unt erschreit ung des Temperatursollwertes erster Art und eine Unterschreitung des Temperatursollwertes zweiter Art feststellen kann. Bei der Unt erschreit ung des Temperatursollwertes erster Art ist die Differenz zwischen Ist-Temperatur und Temperatursollwert kleiner als bei der Unt erschreit ung des Temperatursollwertes zweiter Art. Die Unt erschreit ung erster Art ist also wiederum eine kleine Unt erschreit ung des Sollwertes. Bei der Unterschreitung des Temperatursollwertes zweiter Art soll der erste und der zweite Schlitz geöffnet sein und das erste Infrarot-Heizelement eingeschaltet werden. Dagegen soll bei der Unt erschreit ung des Temperatursollwertes erster Art zwar das erste Infrarot-Heizelement eingeschaltet werden, aber mindestens der erste oder der zweite Schlitz geschlossen bleiben.

Durch die Schließung der Schlitze wird Konvektionswärme unterdrückt. Bei einer kleinen Temperaturabweichung kann also hier reine Strahlungswärme zum Einsatz kommen. Konvektionswärme wird im Einzelfall, wiederum insbesondere bei einer Wärmekammer zur menschlichen Nutzung, als unangenehmer empfunden als Strahlungswärme. In der Regel werden der erste Schlitz und der zweite Schlitz gemeinsam verschlossen bleiben, ggfs. werden auch alle Schlitze verschlossen.

Allgemein ist es auch zweckmäßig, bei der Erstbeheizung der noch unbeheizten Wärmekammer, welche sich typischerweise auf Raumtemperaturniveau von ungefähr 20°C befindet, Strahlungswärme und Konvektionswärme einzusetzen, also alle Schlitze zu öffnen. Hierdurch kann eine schnellere Aufheizung geschehen. Damit verkürzt sich die Wartezeit zur Erstnutzung der Wärmekammer. Ob eine Erstbeheizung vorliegt kann unabhängig von der Temperatur durch ein Erstbeheizungssignal einer Steuereinrichtung festgestellt werden. Dieses kann z.B. aufgrund von Zeit- und/oder Benutzungsdauererfassung erzeugt werden, z.B. immer am frühen Morgen oder nach langer Trainingspause.

Bei einer Temperaturunterschreitung erster Art können bei einem erfindungsgemäßen Verfahren zweckmäßigerweise verschiedene Heizmodi ausgewählt werden. Je nach Größe der Unterschreitung des Temperatursollwertes können verschiedene Anzahlen von Heizfasern zur Heizung herangezogen werden. Bei einer kleinen Unt erschreit ung des Temperatursollwertes, welcher aber dennoch eine Unt erschreit ung erster Art ist, kommt eine erste (kleine) Anzahl von Heizfasern zum Einsatz. Bei einer größeren Unterschreitung des Temperatursollwertes, welche aber immer noch eine Unterschreitung erster Art ist, kommt eine größere zweite Anzahl von Heizfäden zum Einsatz.

Zweckmäßig kann es auch sein, wenn bei geschlossenen Schlitzen diese als Projektionsfläche mitgenutzt werden. Wie erläutert, kommt Konvekt ionswärme vor allem beim ersten Aufheizen der Kabine und bei starken Abweichungen der Ist-Temperatur von der Soll-Temperatur in Betracht. Bei der normalen Nutzung der Kabine ist dies meist nicht der Fall. In dieser Nutzungsphase kann es aber besonders vorteilhaft sein, Informationen auf die Innenwände einzublenden. Diese können dann auch auf die Schlitzblenden eingeblendet werden, so dass eine große, im Wesentlichen unterbrechungsfreie Projektionsfläche zur Verfügung steht.

Weitere Merkmale, aber auch Vorteile der Erfindung, ergeben sich aus den nachfolgend aufgeführten Zeichnungen und der zugehörigen Beschreibung. In den Abbildungen und in den dazugehörigen Beschreibungen sind Merkmale der Erfindung in Kombination beschrieben. Diese Merkmale können allerdings auch in anderen Kombinationen von einem erfindungsgemäßen Gegenstand umfasst werden. Jedes offenbarte Merkmal ist also auch als in technisch sinnvollen Kombinationen mit anderen Merkmalen offenbart zu betrachten. Die Abbildungen sind teilweise leicht vereinfacht und schematisch:
- Fig. 1: ist eine Grundrisszeichnung, welche eine erfindungsgemäße Wärmekammer zeigt
- Fig. 2: ist eine perspektivische Darstellung eines erfindungsgemäßen Heizelementes
- Fig. 3: ist eine leicht schematische Querschnittszeichnung eines Heizelementes, welches im Wesentlichen dem aus Fig. 2 entspricht
- Fig. 4: ist eine perspektivische Darstellung eines anderen erfindungsgemäßen Heizelementes
- Fig. 5: ist eine Querschnittsdarstellung, welche das Heizelement aus Fig. 4 zusammen mit einem Halteprofil zeigt

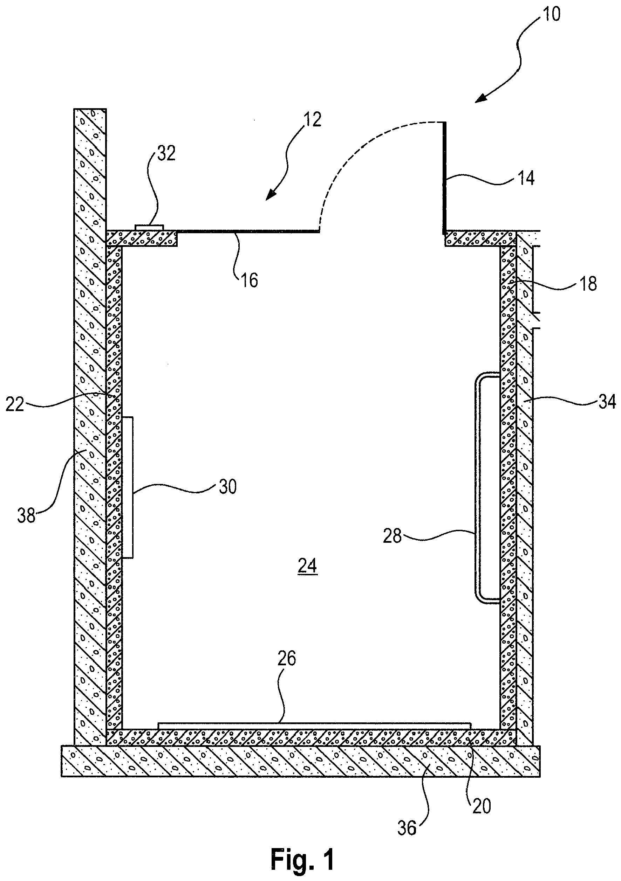

Fig. 1 stellt in leicht schematischer Vereinfachung den Grundriss einer erfindungsgemäßen Wärmekammer dar. Es handelt sich also um eine Darstellung in der Aufsicht. Die Wärmekammer ist als Trainingsraum 10 für das Körpertraining bei erhöhter Temperatur gestaltet. Sie umfasst eine Vorderwand 12, in die eine Tür 14 und angrenzend ein Fensterelement 16 eingelassen sind. An die Vorderwand 12 schließt sich die Seitenwand 18 an, dann die Seitenwand 20, die die Rückwand bildet, und dann die Seitenwand 22, welche der Seitenwand 18 gegenüber liegt. Diese Seitenwände bestimmen zusammen mit der Vorderwand den Innenraum 24 des Trainingsraumes 10.

An der Stirnseite dieses Innenraumes 24 ist an der Seitenwand 20 ein großflächiger Spiegel 26 vorgesehen. An der Seitenwand 18 ist eine Übungsstange 28 vorgesehen. Eine solche Übungsstange 28 erlaubt das Abstützen des Körpers durch einen etwa in Bauchhöhe montierten Handgriff. Es kommt durchaus in Frage, dass die Trainingskabine 10 mit weiteren und anderen Übungselementen ausgestattet ist, beispielsweise können Deckenhacken vorgesehen werden, oder auch andere Trainingsgeräte, welche an einer Wand oder an einer Decke montiert sind, oder welche auch frei im Raum stehen. Dazu könnte auch ein Trainingsfahrrad gehören.

An der Seitenwand 22 ist ein Bildschirm 30 vorgesehen. Dieser Bildschirm 30 kann zu Unterhaltungszwecken dienen und beispielsweise Fernsehbilder übertragen. Er kann auch Informationen, insbesondere auch Informationen zum Trainingsverlauf anbieten. Dazu könnte eine Trainingsanleitung gehören, dazu können aber auch Messwerte gehören, die sich auf das Training beziehen. Zumindest kann dort die Nutzungsdauer der Wärmekammer angezeigt werden.

Außerhalb der Kabine in einem Bereich der Vorderwand 12 befindet sich ein Bedienfeld 32. An diesem Bedienfeld 32 können äußere Einstellungen vorgenommen werden, beispielsweise kann die Temperatur eingestellt werden. Ferner kann sich ein Benutzer dort anmelden.

Wie dargestellt, sind bei dieser Wärmekabine die Seitenwände parallel zu Stützwänden angeordnet. Die Seitenwand 18 grenzt an die Stützwand 34 an, die Seitenwand 20 grenzt an die Stützwand 36 an, und die Seitenwand 22 grenzt an die Stützwand 38 an. Solche Stützwände können speziell für die Wärmekabine zur Verfügung gestellt werden. Es kann sich bei diesen Stützwänden auch um die Wände/Mauern eines ohnehin vorhandenen Raumes handeln, in welchen die Wärmekabine eingepasst wird.

Die Wärmekabine kann so gestaltet sein, dass die Seitenwände selbsttragend sind und die Kabine keine zusätzlichen Stützwände benötigt. Die Wärmekabine kann auch so gestaltet werden, dass die Stützwände zur mechanischen Stabilität der Kabine beitragen. Die Seitenwände können dann insbesondere zur Aufnahme von Heizelementen dienen. Es ist möglich, Heizelemente bündig in die Seitenwände einzupassen und dabei auch so vorzusehen, dass eine wesentliche Fläche der Seitenwände eingenommen wird. Es ist auch möglich, die Seitenwände vollständig als Heizelemente zu gestalten.

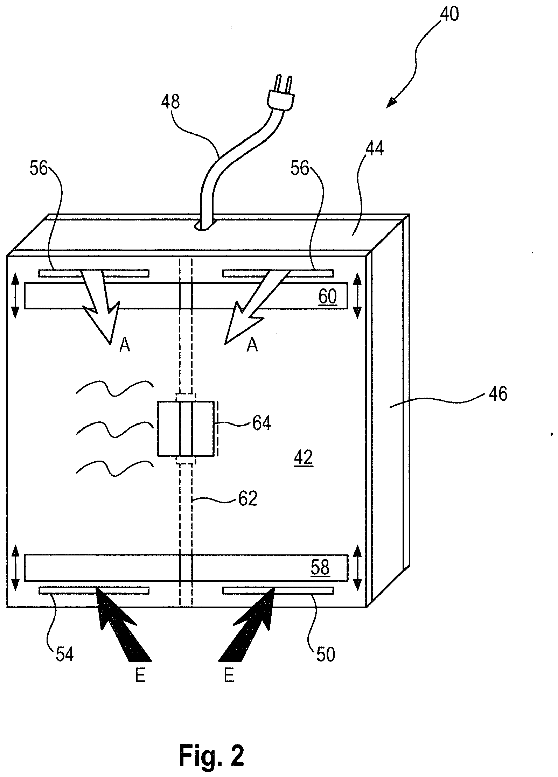

Fig. 2 zeigt in perspektivischer Darstellung ein erfindungsgemäßes Heizelement 40. Dieses ist mit seiner Frontplatte 42 dem Betrachter zugewandt. Ebenfalls erkennbar sind die obere Seitenwand 44 und die weitere Seitenwand 46, die aus dieser Blickrichtung die rechte Seitenwand darstellt. Schematisch angedeutet ist die Stromfuhr 48, die hier als Kabel mit Stecker gestaltet ist. Wenn mehrere Heizelemente verwendet werden, oder wenn das Heizelement in die Seit enwand integriert ist, wird häufig ein anderer elektrischer Anschluss gewählt.

Das Heizelement 40 weist einen unteren Schlitz auf, der hierin auch als erster Schlitz 50 bezeichnet wird. Oberhalb dieses Schlitzes ist im oberen Bereich der Frontplatte, also benachbart zur oberen Seitenwand, ein oberer Schlitz vorgesehen, der hierin auch als zweiter Schlitz 52 bezeichnet wird.

In gleicher Höhe wie der erste Schlitz 50 ist auf der Frontplatte 42 ein dritter Schlitz 54 vorgesehen. Ferner ist in gleicher Höhe wie der zweite Schlitz 52 ein vierter Schlitz 56 in der Frontplatte 42 vorgesehen. Die jeweiligen Schlitze können durch Blenden verschlossen werden.

Dazu ist eine untere Blende 58 vorgesehen, welche verschieblich angeordnet ist. Diese Blende kann im Wesentlichen parallel zur Front platte 42 verschoben werden. In der schematisch dargestellten Position sind die Schlitze offen. Wird die Frontplatte aus dieser Position nach unten verschoben, so verschließt sie die Schlitze 50 und 54. Im oberen Bereich der Frontplatte 42 ist die obere Blende 60 vorgesehen. In der dargestellten Position lässt sie die Schlitze offen. Wird die obere Blende 60 jedoch nach oben verschoben, so verschließt sie die Schlitze 52 und 56.

Die beiden Blenden können mechanisch verschoben werden. Dazu könnte beispielsweise ein Knopf durch einen Schlitz in der Frontplatte 42 nach außen geführt werden. Es ist häufig einfacher, die Blenden elektrisch zu verschieben. Eine entsprechende Lösung ist hier dargestellt. Diese Lösung sieht ein Antriebsgestänge 62 vor, welches auf die obere Blende wie auch auf die untere Blende einwirken kann. Es wäre auch denkbar, für jede Blende ein separates Antriebsgestänge zu wählen. Dieses Antriebsgestänge kann in Form einer einfachen Gewindestange verwirklicht werden. Zum Antrieb des Antriebsgestänges dient der Antriebsmotor 64. Dieser kann als Elektromotor ausgeführt werden.

Die beiden ausgefüllten Pfeile E in Fig. 2 deuten den Weg einströmender Luft an. Die beiden Pfeile A in Fig. 2 deuten den Weg ausströmender Luft an. Die Luft kann also durch die unteren Schlitze 50 und 54 einströmen und durch die oberen Schlitze 52 und 56 ausströmen. Sie wird im Innern des Heizelementes 40 erwärmt. Zusätzliche Wärmeabstrahlung ist durch Wellenlinien angedeutet.

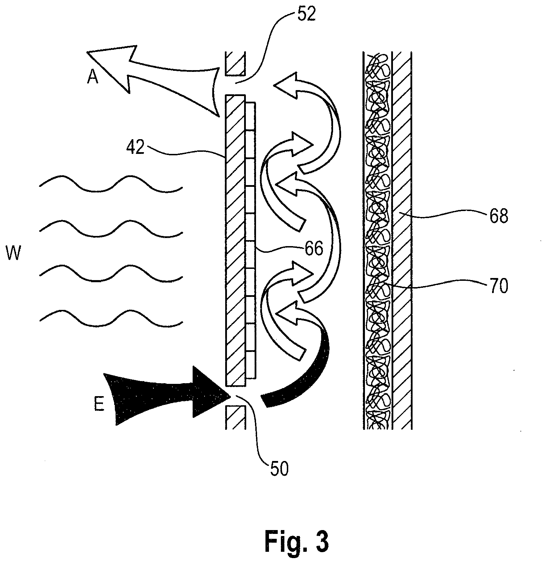

Fig. 3 zeigt einen schematischen und leicht vereinfachten Querschnitt durch das Heizelement 40 nach Fig. 2. In der Frontplatte 42 sind wiederum unten der erste Schlitz 50 und oben der zweite Schlitz 52 zu erkennen. Wie in diesem Querschnitt erkennbar, ist auf der Rückseite der Frontplatte eine Heizmatte 66 angeordnet. Diese ist eine Infrarotheizmatte.

Gegenüberliegend zur Frontplatte 42 ist die Rückwand 68 angeordnet. Diese ist auf der der Frontplatte 42 zugeordneten Seite mit Dämmmaterial 70 ausgekleidet.

In diesem Querschnitt ist das Funktionsprinzip des Heizelementes 40 noch einmal gut erkennbar. Durch den unteren Schlitz 50 kann Raumluft eingelassen werden. Raumluft bewegt sich dabei beispielsweise, wie durch den Pfeil E bezeichnet. Im Innern des Heizelementes 40, welches zumindest durch die Frontplatte 42 und die Rückwand 68 begrenzt wird, wird diese Raumluft zum oberen Schlitz 52 geführt. Dabei werden in der Regel Verwirbelungen stattfinden. Die Raumluft bewegt sich dabei nicht auf den kürzesten Weg vom unteren Schlitz 50 zum oberen Schlitz 52, sondern bewegt sich über eine Strecke, die länger ist als der kürzeste Weg zwischen den Schlitzen an der Heizmatte 66.

Die erwärmte Luft kann dann durch den oberen Schlitz 52 beispielsweise entlang des Pfeils A ausströmen. In dieser Weise wird Konvekt ionswärme erzeugt, die die Wärmekabine 10 aufheizen kann.

Wie durch die Wellenlinien W angedeutet wird, wird aber zusätzlich Strahlungswärme erzeugt. Insoweit wird die Heizmatte 66 in effizienter Weise doppelt genutzt. Die Heizmatte 66 wird im gewissen Umfang die Frontplatte 42 erwärmen. Die erwärmte Frontplatte 42 strahlt dann selbst nach vorne, also in die Wärmekabine hinein, Wärme ab.

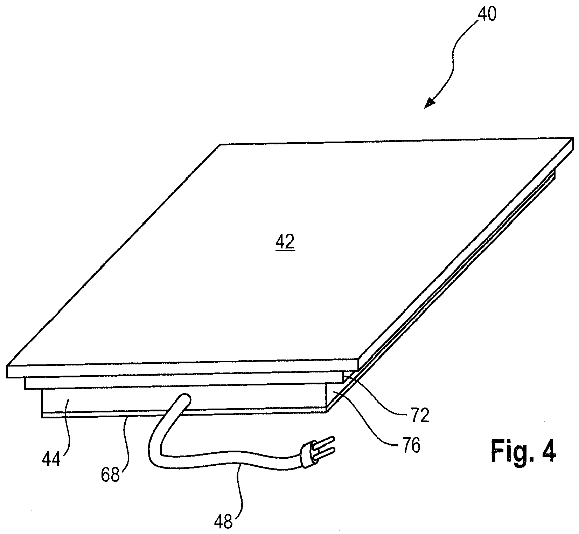

Fig. 4 zeigt ein etwas anders gestaltetes, aber ebenfalls erfindungsgemäßes Heizelement 40 in einer perspektivischen Darstellung. Das Heizelement wird durch die hier nach oben orientierte Frontplatte 42 abgedeckt. Unter der Frontplatte 42 ist eine Zwischenplatte 72 angeordnet. Unter diesen beiden Platten sind die Seitenwände des Heizelementes sowie eine Rückwand 68 vorgesehen, so dass das Heizelement wiederum eine Kastenform aufweist.

Erkennbar sind in dieser Abbildung die obere Seitenwand 44 sowie eine weitere Seitenwand 74. Durch diese Seitenwände und in der Regel weitere nicht sicht bare Seitenwände wird ein Heizraum 76 umschlossen. Durch Schlitze in der Frontplatte 42 oder an anderer Stelle (hier nicht abgebildet) kann Luft in den Heizraum 76 eingeführt werden und dort aufgeheizt werden.

Das Heizelement 40 nach der Ausführungsform der Fig. 4 weist abweichend von dem Heizelement aus Fig. 2 eine überstehende Frontplatte 42 auf. Diese überstehende Front platte hat technische wie ästhetische Vorteile. Es ist leicht möglich, in der Ebene der Front platte 42 mehrere Heizelemente 40 bündig nebeneinander anzuordnen. So kann eine Art Heizwand erzeugt werden, in der die einzelnen Heizelemente gar nicht mehr sichtbar werden. Die Frontplatte 42 kann so gewählt werden, dass sie ein geeignetes und ästhetisch anspruchsvolles Wandmaterial abgibt.

Im Übrigen können die überstehenden Kanten der Frontplatte 42 und ggfs. auch der darunter angeordneten Zwischenplatte 72 zur Halterung des Heizelementes verwendet werden. Dazu ist es zweckmäßig, wenn solche Überstände zumindest an zwei gegenüberliegenden Seiten, im Einzelfall aber auch an allen Seiten vorgesehen sind. Eine zweckmäßige Befestigungsmöglichkeit für Heizelemente, die solche Überstände ausnutzt, wird nachfolgend beschrieben. Wenn im Bereich der Überstände keine oder nur eine schwache Wärmeabstrahlung erfolgt, kann dies auch durch Abgabe von Konvekt ionswärme kompensiert werden.

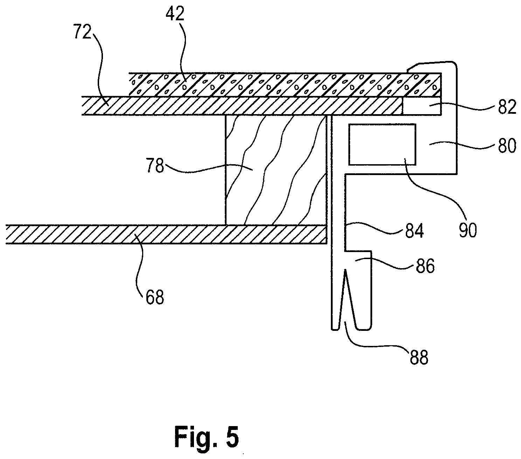

Fig. 5 zeigt eine Befestigungsmöglichkeit für ein Heizelement, wie in Fig. 4 dargestellt. In dieser Darstellung sind die Frontplatte 42 und die darunterliegende Zwischenplatte 72 nach oben orientiert. Gegenüberliegend ist die Rückwand 68 angeordnet. Zwischen der Rückwand 68 und der Zwischenplatte 72 ist ein Abstandsprofil 78 angeordnet. An diesem Abstandsprofil 78 können beide Platten befestigt werden. Das Abstandsprofil 78 kann zugleich auch als Seitenwand dienen. Es kann umlaufend an allen Seiten der Rückwand 68 angeordnet sein. Das Abstandsprofil 78 kann ein massives Profil sein und zweckmäßigerweise, sowie dargestellt, einen rechteckigen oder quadratischen Querschnitt haben. Das Profil kann beispielsweise aus Werkstoffen wie Holz, MDF oder Sperrholz gefertigt sein. Es kann auch aus Metall gefertigt sein, etwa aus Aluminium oder im Einzelfall auch aus Stahl. Dann wird es in der Regel als Hohlprofil ausgeführt sein.

Angrenzend an das Abstandsprofil 78 ist ein Halteprofil 80 angeordnet. Dieses Halteprofil weist die Nut 82 auf. Die Nut 82 kann die Kanten der Frontplatte 42 aufnehmen. Sie kann zusätzlich, so wie dargestellt, auch die Zwischenplatte 72 aufnehmen. Das Halteprofil 80 weist ferner eine Seitenwange 84 auf. Die Seitenwange kann als Seitenwand dienen, insbesondere dann, wenn nicht zusätzlich ein Abstandsprofil 78 vorgesehen ist. An der Nut 82 gegenüberliegendes Ende der Seitenwange 84 ist eine Verbindungszunge 86 vorgesehen.

Diese Verbindungszunge weist hier insbesondere eine Stecknut 88 auf. In die Stecknut 88 der Verbindungszunge 86 kann ein Verbindungsmittel eingefügt werden. Mit einem solchen Verbindungsmittel kann die Verbindung zu einem Halteprofil ähnlicher Art hergestellt werden. Ein solches Halteprofil kann eine korrespondierende Verbindungszunge und eine korrespondierende Stecknut aufweisen. Die beiden Stecknuten können beispielsweise durch eine Profillippe verbunden werden.

Das Halteprofil 80 ist zweckmäßigerweise aus Metall gefertigt, vorzugsweise aus einem Leicht metall, beispielsweise wiederum aus Aluminium. Um Material und Gewicht zu sparen, kann in dem Halteprofil 80 ein Hohlraum 90 vorgesehen sein.

An der vorangegangenen Beschreibung und den Abbildungen erkennt man, wie sich insgesamt ein Heizprofil herstellen lässt, welches eine Wärmekabine sehr effizient aufheizen kann, zugleich preiswert herstellbar ist und hohen ästhetischen Ansprüchen genüg

### Bezugszeichenliste

- 10: Wärmekabine
- 12: Vorderwand
- 14: Tür
- 16: Fensterelement
- 18: Seit enwand
- 20: Seit enwand
- 22: Seit enwand
- 24: Innenraum
- 26: Spiegel
- 28: Übungsstange
- 30: Bildschirm
- 32: Bedienfeld
- 34: Stützwand/Mauer
- 36: Stützwand/Mauer
- 38: Stützwand/Mauer
- 40: Heizelement
- 42: Front platt e
- 44: Obere Seit enwand
- 46: Seit enwand
- 48: Stromzufuhr
- 50: erster Schlitz/Unterer Schlitz
- 52: zweiter Schlitz/Oberer Schlitz
- 54: dritter Schlitz
- 56: vierter Schlitz
- 58: untere Blende
- 60: obere Blende
- 62: Antriebsgestänge
- 64: Antriebsmotor
- 66: Heizmatte
- 68: Rückwand/Rückenplatte
- 70: Dämmmatte
- 72: Zwischenplatte
- 74: Weitere Seit enwand
- 76: Heizraum
- 78: Abstandsprofil
- 80: Halteprofil
- 82: Nut
- 84: Seit enwange
- 86: Verbindungszunge
- 88: Stecknut
- 90: Hohlraum

## Patentansprüche

1. Heizelement (40), welches zumindest eine Frontplatte (42) aufweist, wobei in der Frontplatte (42) mindestens ein erster Schlitz (50) und ein zweiter Schlitz (52) vorgesehen sind, so dass eine Luftströmung vom ersten Schlitz (50) zum zweiten Schlitz (52) stattfinden kann, wobei das Heizelement (40) ferner ein Infrarot-Element aufweist, welches die Frontplatte (42) erwärmen kann, und welches ferner auf die Luftströmung einwirken kann, welche vom ersten Schlitz (50) zum zweiten Schlitz (52) führt.

2. Heizelement (40) nach dem vorhergehenden Anspruch, bei dem der erste Schlitz (50) im unteren Viertel der Frontplatte (42) angeordnet ist und der zweite Schlitz (52) im oberen Viertel der Frontplatte (42) angeordnet ist.

3. Heizelement (40) nach einem der vorhergehenden Ansprüche, bei dem auf der Innenseite der Frontplatte (42) ein Infrarot-Element vorgesehen ist.

4. Heizelement (40) nach dem vorhergehenden Anspruch, bei dem das Infrarot-Element eine Heizmatte (66) ist, die Karbonfasern ent hält .

5. Heizelement (40) nach dem vorhergehenden Anspruch, bei dem die Heizmatter (66) durch Erwärmung von Heizfasern Wärme erzeugt und eine unterschiedliche Anzahl von Heizfasern zur Wärmeerzeugung eingesetzt wird.

6. Heizelement (40) nach einem der vorhergehenden Ansprüche, bei dem das Heizelement (40) außer der Frontplatte (42) noch eine im Wesentlichen parallellaufende Rückenplatte (68) aufweist.

7. Heizelement (40) nach dem vorhergehenden Anspruch, bei dem ferner eine linke und eine rechte Seitenwand, eine untere Wand und eine obere Wand vorgesehen sind.

8. Heizelement (40) nach einem der vorhergehenden Ansprüche, bei dem die Frontplatte (42) eine obere Überstandsfläche, eine untere Überstandsfläche und zwei seitliche Überstandsflächen hat.

9. Heizelement (40) nach einem der vorhergehenden Ansprüche, bei dem im unteren Viertel der Frontplatte (42) ein erster Schlitz (50) und ein dritter Schlitz (54) vorgesehen sind.

10. Heizelement (40) nach einem der vorhergehenden Ansprüche, bei dem im oberen Viertel der Frontplatte ein zweiter Schlitz (52) und ein vierter Schlitz (56) vorgesehen sind.

11. Heizelement (40) nach einem der vorhergehenden Ansprüche, bei dem für mindestens einen der Schlitze eine Schließvorrichtung vorgesehen ist.

12. Heizelement (40) nach dem vorhergehenden Anspruch, bei dem die Schießvorrichtung eine innen im Heizelement (42) vorgesehene Blende (58; 60) umfasst.

13. Heizelement (40) nach dem vorhergehenden Anspruch, bei dem die Blende (58; 60) verschieblich gelagert ist.

14. Verfahren zum Beheizen einer Wärmekammer (10), bei dem mindestens ein erstes Infrarot-Heizelement zum Einsatz kommt, und eine Temperaturmessung vorgesehen ist, die zum Messen einer Ist-Temperatur dient und eine Regelungseinrichtung vorgesehen ist, welche bei einer Überschreitung oder Unt erschreit ung eines Temperatursollwertes ein korrespondierendes Signal erzeugen kann und bei dem die Regelungseinrichtung mindestens eine Unt erschreit ung des Temperatursollwertes erster Art und eine Unt erschreit ung des Temperatursollwertes zweiter Art feststellen kann, wobei bei der Unt erschreit ung des Temperatursollwertes erster Art die Differenz zwischen Ist-Temperatur und Temperatursollwert kleiner ist als bei der Unterschreitung des Temperatursollwertes zweit er Art, und wobei bei der Unt erschreit ung des Temperatursollwertes zweiter Art der erste und der zweite Schlitz geöffnet sind und das erste Infrarot-Heizelement eingeschaltet wird und bei der Unterschreitung des Temperatursollwertes erster Art das erste Infrarot-Heizelement eingeschaltet wird, aber mindestens der erste Schlitz (50) oder der zweite Schlitz (52) verschlossen bleiben.

15. Verfahren zum Beheizen einer Wärmekammer (10) nach dem vorhergehenden Anspruch bei dem eine Steuereinrichtung ein Erst beheizungssignal erzeugen kann und nach Erzeugung des Erstbeheizungssignals der erste Schlitz (50) und der zweite Schlitz (52) geöffnet werden oder bleiben und mindestens das erste Infrarot-Heizelement eingeschaltet wird.
